(19) **Europäisches Patentamt / European Patent Office / Office européen des brevets**

(11) **EP 1 234 396 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
*H04J 3/16* (2006.01)    *H04J 3/24* (2006.01)
*H04L 12/413* (2006.01)

(21) Anmeldenummer: **00988578.1**

(22) Anmeldetag: **10.11.2000**

(86) Internationale Anmeldenummer:
**PCT/DE2000/003937**

(87) Internationale Veröffentlichungsnummer:
**WO 2001/041339 (07.06.2001 Gazette 2001/23)**

(54) **MULTIPLEXVERFAHREN FÜR GIGABIT ETHERNET SIGNALE IN DER SYNCHRONEN DIGITAL HIERARCHIE**

MULTIPLEX METHOD FOR GIGABIT ETHERNET SIGNALS IN THE SYNCHRONOUS DIGITAL HIERARCHY

PROCEDE MULTIPLEX POUR SIGNAUX ETHERNET DE L'ORDRE DU GIGABIT DANS LA HIERARCHIE NUMERIQUE SYNCHRONE

(84) Benannte Vertragsstaaten:
**DE GB**

(30) Priorität: **29.11.1999 DE 19957301**

(43) Veröffentlichungstag der Anmeldung:
**28.08.2002 Patentblatt 2002/35**

(73) Patentinhaber:
• **Nokia Siemens Networks GmbH & Co. KG
81541 München (DE)**
• **Müller, Horst
82069 Hohenschäftlarn (DE)**

(72) Erfinder: **MÜLLER, Horst
82069 Hohenschäftlarn (DE)**

(56) Entgegenhaltungen:
**EP-A- 0 656 704        EP-A- 0 944 290
EP-A- 0 982 969        WO-A-00/74286**

**Beschreibung**

Datenendgeräte wie z.B. Router oder Switche haben für lokale Anwendungen wie z.B. für ein LAN-Netz eine Schnittstelle, die in der Empfehlung IEEE Draft P802.3z als 1000BASE-X Schnittstelle bezeichnet wird und in der Literatur als Gigabit Ethernet Schnittstelle bekannt ist. Diese Schnittstelle hat jedoch nur eine sehr begrenzte Reichweite von einigen 100 m. Will man die LAN-Netze räumlich erweitern oder MAN bzw. WAN-Netze bilden, so müssen diese Gigabit Ethernet Signale über Übertragungsnetze transportiert werden. Üblicherweise werden für diese Übertragungsnetze in Europa Übertragungssysteme eingesetzt, die nach der Synchronen Digital Hierarchie SDH entsprechend der ITU-Empfehlung G.707 arbeiten. In USA arbeiten diese Systeme nach der SONET-Norm, die ebenfalls in G.707 festgelegt ist.

Aufgabe der Erfindung ist es eine Schaltungsanordnung und ein Verfahren anzugeben in dem Ethernet Signale in SDH/SONET-Systemen eingefügt werden können.

Die Lösung der Aufgabe ergibt sich aus den Merkmalen des Patentanspruchs 1, 7, 8 oder 12.

Die Erfindung bringt den Vorteil mit sich, daß zwei bzw. acht Gigabit Ethernet Signale in einem STM-16 bzw. STM-64 Signal untergebracht werden können.

Die Erfindung bringt den Vorteil mit sich, daß nur der unterste Layer (Physical Layer) des Protocol Stacks des Gigabit Ethernet Signals zu bearbeiten ist, nicht aber die höheren Layer (Layer 2 bis 7).Dies bringt den Vorteil mit sich, daß die Realisierung des Verfahrens relativ einfach ist.

Weitere Besonderheiten der Erfindung werden aus den nachfolgenden näheren Erläuterungen eines Ausführungsbeispiels anhand von Zeichnungen ersichtlich.

Es zeigen:

Figur 1 Multiplexverfahren für ein Gigabit Ethernet Signal in einem STM-N Signal,
Figur 2 eine Struktur eines VC-4-8c Signals,
Figur 3 eine Paketstrukur,
Figur 4 ein weiteres Multiplexverfahren für ein Gigabit Ethernet Signal in einem STM-N Siganal und
Figur 5 eine Darstellung eines Protocol stacks.

Gigabit Ethernet Signale haben eine Bitrate von 1,25Gbit/s. Die in G.707 festgelegten Bitraten für STM-16 Signale sind 2,488320Gbit/s und für STM-64 Signale 9,953280Gbit/s.

Zu einer wirtschaftlichen Ausnutzung der Übertragungskapazität werden zwei Gigabit Ethernet Signale in einem STM-16 Signal bzw. bis zu acht Gigabit Ethernet Signale in einem STM-64 Signal eingefügt bzw. mit anderen spezifischen SDH-Signalen in einem STM-N Signal (N=16, 64, 256,..) gemischt.

Das Verfahren gemäß der Erfindung beschreibt eine Möglichkeit, wie die Bitrate eines Gigabit Ethernet Signals in geeigneter Form reduziert werden kann, um obige Forderung zu erfüllen.

Das Gigabit Ethernet Signal weist eine nominelle Bitrate von 1Gbit/s auf, wird aber entsprechend IEEE Draft P802.3z einer 8B/10B-Codierung unterworfen, wodurch die Bitrate von 1Gbit/s auf 1,25Gbit/s erhöht wird, um möglichst viele Signalübergänge und eine Gleichstromfreiheit des Signals zu gewährleisten, die wiederum eine einfachere Regeneration des Signals und eine Taktrückgewinnung auf der Empfangsseite ermöglicht. Bei einer Übertragung innerhalb eines STM-N Signals kann anstelle der 8B/10B-Codierung ein Scrambler verwendet werden, der ebenfalls für genügend häufige Signalübergänge sorgt. Die 8B/10B-Codierung ist in der Empfehlung IEEE Draft P802.3z in Table 36-1a bis 1e und Table 36-2 beschrieben. Die Table 36-1 ist hierbei für die Dateninformationen, die Table 36-2 für Kontrollinformationen vorgesehen.

Das erfindungsgemäße Verfahren sieht nun vor, eine 10B/8B-Decodierung durchzuführen und je nachdem, ob es sich um Daten- oder Kontrollinformationen handelt, ein Bit an das decodierte 8bit Codewort anzuhängen. Ein Datenwort wird z.B. durch ein Bit mit dem logischen Wert "1", ein Kontrollwort durch ein Bit mit dem logischen Wert "0" gekennzeichnet. Dadurch wird die 8B/10B-Codierung in eine 8B/9B-Codierung umgewandelt, wodurch die Bitrate des Gigabit Ethernet Signals von 1,25Gbit/s auf 1,125Gbit/s reduziert wird. Dies bringt den Vorteil mit sich, zwei bzw. acht Gigabit Ethernet Signale in einem STM-16 bzw. STM-64 Signal unterzubringen.

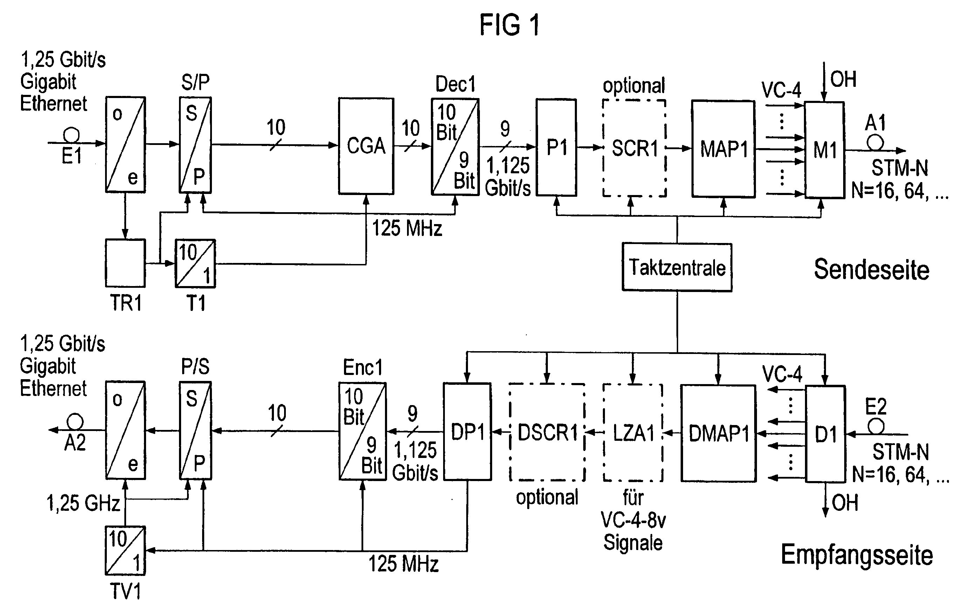

In der Fig. 1 ist im oberen Teil die Sende- und im unteren Teil die Empfangsseite eines SDH/SONET-Systems für STM-N Signale (N = 16, 64, 256,..) dargestellt. Das am Eingang E1 ankommende optische Gigabit Ethernet Signal wird optisch elektrisch gewandelt und in einer Taktrückgewinnungsschaltung TR 1 wird aus dem Datensignal ein 1,25GHz Takt zurückgewonnen. Mit diesem Takt wird das elektrisch gewandelte Eingangssignal in einen Seriell/Parallel Umsetzer S/P eingelesen. In einem Taktteiler T 1 wird der 1,25GHz Takt um den Faktor 10 geteilt. Der gewonnene 125MHz Takt dient zum Auslesen des Datensignals auf 10 parallelen Leitungen aus dem Seriell/Parallel Umsetzer S/P. In einer Code group alignment Schaltung CGA werden die 10 bit Worte erkannt und einem Decoder Dec 1 in der Form zugeführt, dass auf der ersten Leitung jeweils das MSB (most significant bit) und auf der zehnten Leitung das LSB (least significant bit) übertragen wird. In dem Decoder Dec 1 erfolgt wie eingangs beschrieben eine 10B/8B Decodierung und an das 8B Codewort wird ein Bit angehängt, das kennzeichnet, ob es sich um eine Daten- oder Kontrollinformation handelt. Das in der Bitrate somit auf 1,125Gbit/s reduzierte Signal wird auf neun parallelen Leitungen einem Paketierer P1 zugeführt, wobei auf der ersten Leitung das MSB, auf der achten Leitung das LSB und auf der neunten Leitung die Kennzeichnung übertragen wird, ob es sich um Daten oder Kontrollinformation handelt.

Der Paketierer P 1 hat die Aufgabe, mehrerer dieser 9bit Worte zu Paketen zusammenzufassen, die in einem weiteren Schritt in acht contiguous oder virtuell verkettete VC-4 Signale gemappt werden. Die contiguous und virtuelle Verkettung (concatenation) ist in der Empfehlung G.707 unter Punkt 8.1.7 beschrieben und dient der Übertragung von Signalen, die breitbandiger als ein VC-4 Signal (149,760 Mbit/s) sind. Das Prinzip der virtuellen Verkettung ist ferner in der Patentschrift EP 0429 888 B1 beschrieben. Für das beschriebene Verfahren ist es unerheblich, ob eine contiguous oder virtuelle Verkettung verwendet wird, da lediglich die Pointerverarbeitung der beiden Verkettungsmethoden unterschiedlich ist, die Nutzlast jedoch bei beiden Methoden genau identisch ist. Das Verfahren gemäß der Erfindung beschreibt, wie diese Nutzlast für die Übertragung von Gigabit Ethernet Signalen verwendet werden kann.

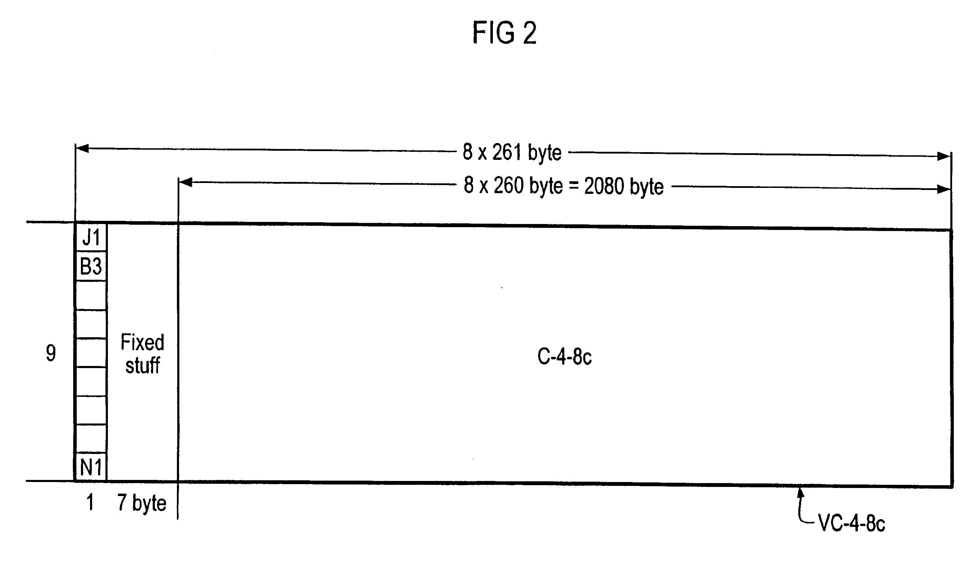

In der Empfehlung G.707 ist in Figure 8-8 allgemein eine VC-4-Xc Verkettung dargestellt. Figur 2 zeigt nun beispielhaft die Verkettung von acht VC-4 Signalen zu einem VC-4-8c Signal, in dem ein 1,125Gbit/s Signal untergebracht werden kann. In einer ersten Spalte des VC-4-8c Signals wird beginnend mit dem Byte J1 ein gemeinsamer Path overhead POH des VC-4-8c Signals übertragen. Es folgen 7 Spalten, die mit Fixed stuff FS aufgefüllt sind. Im Fall einer virtuellen Verkettung wird kein gemeinsamer POH für das VC-4-8v Signal gebildet, sondern jedes der verketteten VC-4 Signale behält seinen eigenen POH, der dann in der ersten Spalte und den sieben mit Fix stuff bezeichneten Spalten übertragen wird. Es folgt der Bereich für die Nutzinformation mit 8 x 260byte entsprechend 2080byte pro Zeile und damit 2080 x 9 = 18 720byte pro Rahmen. Bei einer Rahmenfrequenz von 8kHz beträgt die Kapazität dieser Nutzlast somit:

$$18\ 720\text{byte} \times 8 \times 8\text{kHz} = 1{,}198\ 080\text{Gbit/s.}$$

Im folgenden wird nun beschrieben, wie in dieser Nutzlast von 1,198 080Gbit/s ein 1,125Gbit/s Signal untergebracht werden kann. Da die Frequenz des Gigabit Ethernet Signals im allgemeinen nicht synchron zu der Frequenz des STM-N Signals und damit auch nicht synchron zu der Nutzlast sein wird, soll ein Paketierungsverfahren mit Auffüllen (Padding) für die Frequenzanpassung verwendet werden.

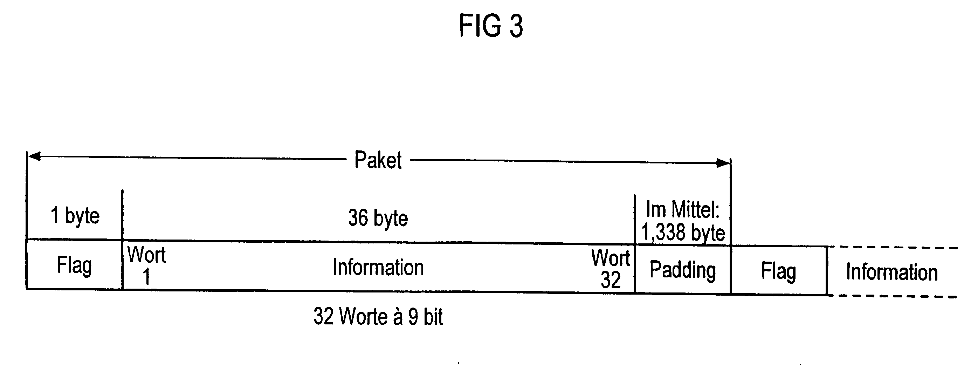

Wie in Figur 3 dargestellt soll der Beginn eines Paketes mit einem Flag (1 byte lang) gekennzeichnet werden, es folgen n Datenworte à 9bit (Information) und zur Frequenzanpassung eine bestimmte Anzahl von Paddingbytes.

Es muß dabei gelten:

$$(\text{Flag} + \text{Information} + \text{Padding}) / \text{Information} = 1{,}198$$
$$080\text{Gbit/s} / 1{,}125\text{Gbit/s} = 1{,}06496$$

Ferner soll das Informationsfeld durch 9 teilbar sein (9 Bit Worte) und m Byte lang sein, damit die 9 bit Struktur der Daten auf dem Übertragungsweg erhalten bleibt. Beispielsweise wird das Informationsfeld mit 36 byte Länge gewählt. Es kommen dann 32 Worte à 9 Bit in dem Informationsfeld unter, wobei nach dem Flag das MSB des ersten Wortes folgt.

Damit gilt:

$$(\text{Flag} + \text{Information} + \text{Padding}) / \text{Information} = 1 + 36 +$$
$$\text{Padding} / 36 = 1{,}06496$$

und daraus folgt:

$$\text{Padding} = 36 \times 1{,}06496 - (1+36) = 1{,}33856.$$

Es werden also im Mittel 1,33856 Paddingbytes gesendet, d.h. es werden in etwa einem Drittel der Fälle ein Paddingbyte und in zwei Drittel der Fälle zwei Paddingbytes pro Paket angehängt. Je nach Länge des Paddings ist ein Paket somit 38 oder 39 byte lang. Das Flag- und das Paddingbyte sollten eine möglichst große Hammingdistanz zueinander aufweisen, um sicherzustellen, dass der Anfang eines Paketes sicher erkannt werden kann.

Ebenso können auch Pakete konstanter Länge, bestehend z.B. aus 1 byte Flag und 36 byte Information gebildet werden. Zur Frequenzanpassung werden Leerpakete gesendet, die anstelle der 36 byte Information 36 byte Leerinformation beinhalten. Zur Unterscheidung der Leerpakete von den Informationspaketen werden zwei unterschiedliche Flag bytes verwendet, die zueinander eine möglichst große Hammingdistanz aufweisen. Der Nachteil dieses zweiten Verfahrens ist jedoch, dass relativ große Pufferspeicher für die Zwischenspeicherung der Information vorzusehen sind und der Aufwand zur Unterdrückung des Jitters der Gigabit Ethernet Signale am Ausgang A2 wesentlich höher ist.

Das Ausgangssignal des Paketierers P1 kann optional in einem Scrambler SCR 1 verscrambelt werden, falls der 7-stufige Scrambler, der entsprechend der Empfehlung G.707 in einem folgenden Multiplexer M1 ohnehin vorgesehen ist, als nicht ausreichend erachtet wird. In dem Mapper MAP 1 wird das Ausgangssignal des Scramblers entweder in acht unmittelbar aufeinander folgende (contiguous) verkettete VC-4-8c Signale oder virtuell verkettete VC-4-8v Signale verpackt. Das Ausgangssignal dieses Mappers wird schließlich gemeinsam mit anderen VC-4 Signalen in einem Multiplexer M1 unter Hinzufügen von SDH spezifischen Overheadinformationen OH zu einem STM-N Signal (N = 16, 64, 256,...) A1 ergänzt. Paketierer, Scrambler, Mapper und der Multiplexer werden von einer Taktzentrale mit den erforderlichen Takten versorgt.

Empfangsseitig werden zunächst in einem Demultiplexer D1 die Overheadinformationen OH aus dem STM-N Signal entfernt und die einzelnen VC-4 Signale zurückgewonnen. In einem Demapper wird aus dem contiguous oder virtuell verketteten VC-4-8c/VC-4-8v Signal analog zur Senderichtung das 1,198 080Gbit/s Nutzsignal zurückgewonnen. Im Falle einer virtuellen Verkettung müssen dabei wie in der Patentschrift EP 0 429 888 B1 näher beschrieben unterschiedliche Laufzeiten der verketteten VC-4 Signale in geeigneten Pufferspeichern für den Laufzeitausgleich LZA 1 ausgeglichen werden. Falls das Nutzsignal sendeseitig verscrambelt wurde, muß dies in einem Descrambler DSCR 1 rückgängig gemacht werden. Es folgt der Depaketierer DP 1, der die Flag- und Paddinginformationen erkennt und beseitigt und das Datensignal mit der ursprünglichen Bitrate von 1,125Gbit/s zurückgewinnt. Demultiplexer, Demapper, Laufzeitausgleich, Descrambler und Depaketierer werden von der Taktzentrale mit den erforderlichen Takten versorgt.

Ein nachfolgender Encoder Enc 1 erkennt an Hand des neunten Bits, ob es sich um Daten- oder Kontrollinformation handelt und bildet entsprechend dem in IEEE Draft P802.3z festgelegten 8B/10B Codierverfahren das 1,25Gbit/s Signal. In einem Parallel/Seriell Umsetzer PS wird das auf 10 parallelen Leitungen ankommende Signal in ein serielles 1,25Gbit/s Gigabit Ethernet Signal umgesetzt und nach einer elektrisch/optischen Wandlung am Ausgang A2 abgegeben. Der Depaketierer DP 1 liefert einen 125MHz Takt, der einem Frequenzvervielfacher TV 1 zugeführt wird, der daraus einen 1,25GHz Takt für das serielle Ausgangssignal A2 erzeugt.

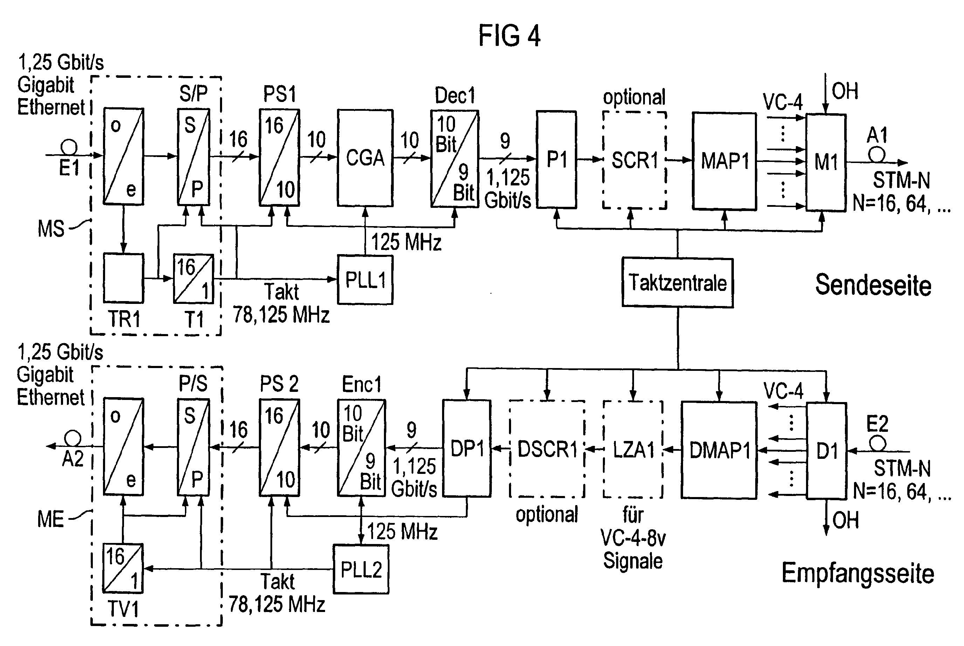

In Fig. 4 wird eine Variante der Ausführung des Multiplexverfahrens für ein Gigabit Ethernet Signal in einem STM-N Signal gezeigt. Bei dieser Ausgestaltung werden kommerziell verfügbare Module eingesetzt. Das sendeseitig verwendete Modul MS beinhaltet den optisch/elektrischen Wandler, die Taktrückgewinnung TR 1, einen Taktteiler um den Faktor 16, sowie einen Seriell/Parallel Umsetzer S/P, in den das elektrisch gewandelte Eingangssignal mit dem 1,25GHz Takt eingeschrieben und mit dem um den Faktor 16 heruntergeteilten 78,125MHz Takt ausgelesen wird.

Zusätzlich gegenüber dem in Figur 1 dargestellten Verfahren sind nun ein Pufferspeicher PS 1 und eine Phase Lock Loop Schaltung PLL 1 erforderlich, die jedoch auf einer niedrigeren Bitrate arbeiten, so dass sie in CMOS realisiert werden können. Der 78,125MHz Takt wird der Phase Lock Loop Schaltung PLL 1 zugeführt, die daraus einen 125MHz Takt erzeugt (Teilungsverhältnis 10:16). Das seriell/parallel umgesetzte Datensignal wird in dem Pufferspeicher PS 1 auf 16 parallelen Leitungen mit dem 78,125MHz Takt eingeschrieben und mit dem 125MHz Takt auf 10 parallelen Leitungen ausgelesen. Die weitere Verarbeitung erfolgt entsprechend der Figur 1.

Das empfangsseitig verwendete Modul ME beinhaltet den optisch/elektrischen Wandler, einen Frequenzvervielfacher TV 1 um den Faktor 16, sowie einen Parallel/Seriell Umsetzer P/S. Zusätzlich gegenüber dem in Figur 1 dargestellten Verfahren sind auch hier ein Pufferspeicher PS 2 und eine Phase Lock Loop Schaltung PLL 2 erforderlich. Die PLL 2 Schaltung erzeugt aus dem 125MHz Takt einen 78,125MHz Takt. Das von dem Encoder Enc 1 auf 10 parallelen Leitungen abgegebene Signal wird in den Pufferspeicher PS 2 mit dem 125MHz Takt eingeschrieben und mit dem 78,125MHz Takt auf 16 parallelen Leitungen ausgelesen. Die restlichen Funktionen entsprechen der Figur 1.

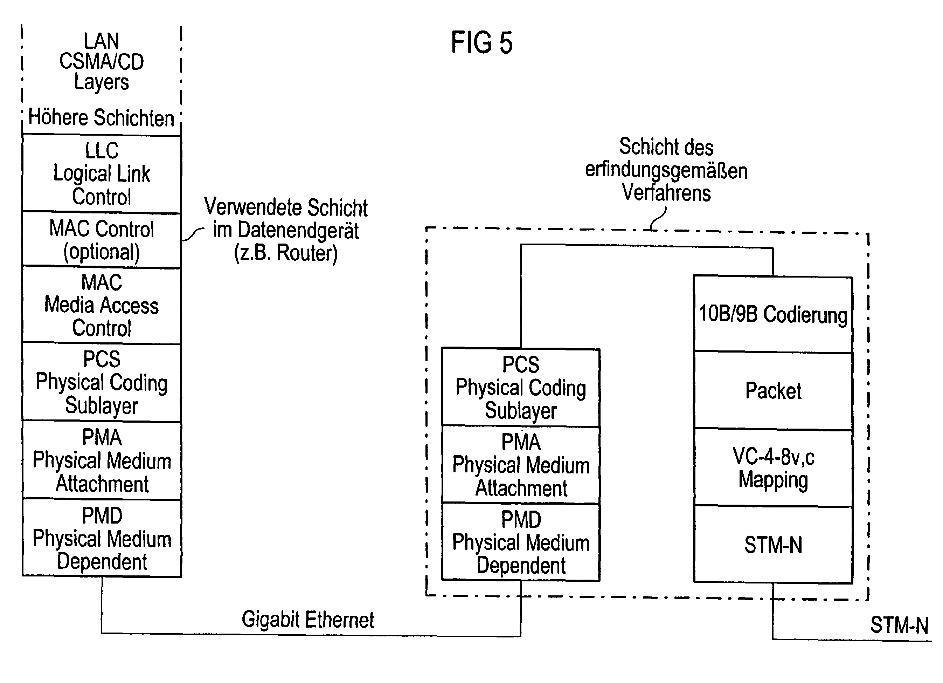

In Figur 5 ist ein Protokoll stack gezeigt, der in einem Datenendgerät (z.B. Router) und in dem SDH-Gerät gemäß der Erfindung verwendet wird. Eine nähere Erläuterung der einzelnen Layer ist in der Empfehlung IEEE Draft P802.3z gegeben.

**Patentansprüche**

**1.** Anordnung zur Einfügung von Ethernet Signalen (E1) in STM-N Signalen (A1) der Synchronen Digitalen Hierachie (SDH), wobei die Ethernet Signale seriell/parallel umgesetzt (S/P) und wortweise einem Decodierer (Dec1) zugeführt werden,
daß der Decodierer (Dec1) eine 10B/8B Decodierung des Ethernet Signals (E1) durchführt und Kontrolldaten und Nutzdaten markiert.

**2.** Anordnung nach Anspruch 1,
**dadurch gekennzeichnet,**
**daß** in dem Decoder (Dec1) jeweils ein logischer Wert an die Kontrolldaten und Nutzdaten anfügbar ist.

**3.** Anordnung nach Anspruch 1,
**dadurch gekennzeichnet,**
**daß** ein Paketierer (P1) den Decodierer (Dec1) nachgeordnet ist, wobei der Paketierer (P1) den vom Decodierer (Dec1) abgegebenen Bitstrom zu Paketen zusammenfaßt und diese in einem nachfolgenden Schritt zu VC-4 Signale zusammenfügt.

**4.** Anordnung nach Anspruch 3,
**dadurch gekennzeichnet,**
**daß** der Paketierer (P1) den Beginn eines Paketes mit einem Flagbyte markiert und am Ende des Paketes ein Paddingbyte beifügt.

**5.** Anordnung nach Anspruch 4,
**dadurch gekennzeichnet,**
**daß** der Paketierer (P1) zwischen dem Flagbyte und dem Paddingbyte Informationsdaten anordnet, wobei die Anzahl der in einem Informationsfeld angeordneten Worte der Nutzdaten (9 Bit Worte) durch 9 teilbar ist und m Byte umfaßt.

**6.** Anordnung nach einem der vorhergehenden Ansprüche,
**dadurch gekennzeichnet,**
**daß** ein Mapper (MAP1) vorgesehen ist, der das Ausgangssignal des Paketierers (P1) entweder in acht unmittelbar aufeinanderfolgende (VC-4-8c) oder virtuell verkettete Signale (VC-4-8v) verpackt,
**daß** ein Multiplexer (M1) zur Hinzufügung von SDH spezifischen Overheadinformationen (OH) zu einem STM-N Signal (A1, N= 16, 64,256,...) vorgesehen ist.

**7.** Anordnung zur Bildung von Ethernet Signalen (A2) aus einem STM-N Signal (E2) der Synchronen Digitalen Hierachie (SDH) mit einem Demultiplexer (D1) zur Trennung der Overheadinformation (OH) aus dem STM-N Signal (E2), einem Demapper (DMAP1) zur Zurückgewinnung des Nutzsignals, einem Depaketierer (DP1) zur Erkennung und Trennung der Flag- und Paddinginformation, wobei am Ausgang des Depaketierers (DP1) Nutzdaten mit einer für STM-N Signalen vorgegebenen Bitrate anliegen, einem Encoder (Enc1) zur Bildung eines für die Ethernet Signale vorgegebenen Bitrate.

**8.** Verfahren zur Einfügung von Ethernet Signalen (E1) in einem STM-N Signal der Synchronen Digitalen Hierachie (SDH), wobei die Ethernet Signale (E1) seriell/parallel (S/P) umgesetzt und wortweise einem Decodierer (Dec1) zugeführt werden, daß eine 10B/8B Decodierung des Ethernet Signals durchgeführt und Kontrolldaten und Nutzdaten markiert werden.

**9.** Verfahren nach Anspruch 8,
**dadurch gekennzeichnet,**
**daß** der decodierte Bitstrom am Ausgang des Decodierers (Dec1) in Paketen zusammenfaßt und diese zu VC-4 Signale zusammengefügt werden.

**10.** Verfahren nach Anspruch 8,
**dadurch gekennzeichnet,**
**daß** zu Beginn eines Paketes ein Flagbyte und am Ende des Paketes ein Paddingbyte angeordnet wird.

**11.** Verfahren nach Anspruch 8,
**dadurch gekennzeichnet,**
**daß** zwischen Flag- und dem Paddingbyte Informationsdaten anordnet werden, wobei die Anzahl der Worte (9 Bit Worte) in dem Informationsfeld das zwischen dem Flag- und Paddingbyte angeordnet wird durch 9 teilbar und m Byte lang ist.

**12.** Verfahren zur Bildung von Ethernet Signalen (A2) aus einem STM-N Signal (E2) der Synchronen Digitalen Hierarchie (SDH) wobei die Overheadinformation (OH) aus dem STM-N Signal abgetrennt, dass Nutzsignal zurück gewonnen und Flag- und Paddinginformation erkannt und abgetrennt werden, wobei die Bitrate der Nutzdaten des STM-N Signals (E2) einem der Bitrate von Ethernet Signalen (A2) entsprechenden Bitrate durch eine 9B/10B Kodierung angepasst wird.

**Claims**

1. Arrangement for inserting Ethernet signals (E1) into STM-N signals (A1) of the Synchronous digital Hierarchy (SDH), where the Ethernet signals are converted into serial/parallel (S/P) signals and fed word-by-word to a decoder (Dec1), the decoder (Dec1) undertakes a 10B/8B decoding of the Ethernet signal (E1) and flags control data and payload,data.

2. Arrangement according to claim 1,
**characterised in that**,
a logical value is able to be added to the control data and payload data respectively in the decoder (Dec1).

3. Arrangement according to claim 1,
**characterised in that**,
a packetizer (P1) is arranged downstream from the decoder (Dec1) with the packetizer (P1) combining the bit stream issued by the decoder (Dec1) into packets and in a subsequent step assembling these into VC-4 signals.

4. Arrangement according to claim 3,
**characterised in that**,
the packetizer (P1) flags the beginning of a packet with a flag byte and inserts padding bytes at the end of the packet.

5. Arrangement according to claim 4,
**characterised in that**,
the packetizer (P1) arranges information data between the flag byte and the padding byte, with the number of words of the payload data arranged in an information field (9-bit words) being divisible by 9 and comprising m bytes.

6. Arrangement according to one of the previous claims,
**characterised in that**,
a mapper (MAP1) is provided which packs the output signal of the packetizer (P1) either into eight directly consecutive (VC-4-8c)_ or virtually concatenated signals (VC-4-8v),
a multiplexer (M1) is provided for adding SDH-specific overhead information (OH) to an STM-N signal (A1, N= 16, 64, 256,...).

7. Arrangement for forming Ethernet signals (A2) from an STM-N signal (E2) of the Synchronous Digital Hierarchy (SDH) with a demultiplexer (D1) for separating the overhead information (OH) from the STM-N signal (E2),
a demapper (DMAP1) for recovering the payload signal, a depacketizer (DP1) for detection and separation of the flag and padding information, with payload data with a bit rate predetermined for STM-N signals being supplied at the output of the depacketizer (DP1),
an encoder (Enc1) for forming a bit rate predetermined for the Ethernet signals.

8. Method for inserting Ethernet signals (E1) into an STM-N signal of the Synchronous Digital Hierarchy (SDH), with the Ethernet signals (E1) being converted into serial/parallel (S/P) signals and being fed word-by-word to a decoder (Dec1), a 1OB/8B channel decoding of the Ethernet signal being executed and control data and payload data being flagged.

9. Method according to claim 8,
**characterised in that**,
the decoded bit stream is combined at the output of the decoder (Dec1) into packets and these are assembled into VC-4 signals.

10. Method according to claim 8,
**characterised in that**,
a padding byte is arranged at the beginning of a packet and at the end of the packet.

11. Method according to claim 8,
**characterised in that**,

information data is arranged between flag and padding byte, with the number of words (9-bit words) in the information field which are arranged between the flag byte and the padding byte being divisible by 9 and being m bytes long.

12. A method for forming Ethernet signals (A2) from an STM-N signal (E2) in the synchronous digital hierarchy (SDH), with the overhead information (OH) being separated from the STM-N signal, with the payload signal being recovered and with flag and padding information being identified and separated, and with the bit rate of the payload data of the STM-N signal (E2) being matched to a bit rate which corresponds to the bit rate of Ethernet signals (A2), by means of 9B/10B coding.

**Revendications**

1. Dispositif permettant d'insérer des signaux Ethernet (E1) dans des signaux STM-N (A1) de la Hiérarchie Numérique Synchrone (SDH), les signaux Ethernet étant convertis de manière sérielle/parallèle (S/P) et amenés mot par mot à un décodeur (Dec1),
**caractérisé en ce que**
le décodeur (Dec1) effectue un décodage 10B/8B du signal Ethernet (E1) et marque des données de contrôle et données utiles.

2. Dispositif selon la revendication 1,
**caractérisé en ce que**
dans le décodeur (Dec1), à chaque fois une valeur logique peut être ajoutée aux données de contrôle et données utiles.

3. Dispositif selon la revendication 1,
**caractérisé en ce que**
un assembleur de paquets (P1) est monté à la suite du décodeur (Dec1), l'assembleur de paquets (P1) regroupant le train binaire émis par le décodeur (Dec1) en paquets et assemblant ces derniers en signaux VC-4 dans une étape suivante.

4. Dispositif selon la revendication 3,
**caractérisé en ce que**
l'assembleur de paquets (P1) marque le début d'un paquet avec un octet de drapeau et ajoute à la fin du paquet un octet de remplissage.

5. Dispositif selon la revendication 4
**caractérisé en ce que**
l'assembleur de paquets (P1) place des données d'information entre l'octet de drapeau et l'octet de remplissage, le nombre de mots des données utiles (mots de 9 bits) placés dans un champ d'information étant divisible par 9 et comprenant m octets.

6. Dispositif selon l'une des revendications précédentes,
**caractérisé en ce que**
un mappeur (MAP1) est prévu, qui empaquette le signal de sortie de l'assembleur de paquets (P1) ou bien en huit signaux se succédant immédiatement (VC-4-8c) ou bien concaténés virtuellement (VC-4-8v),
un multiplexeur (M1) est prévu, destiné à ajouter une information d'overhead (OH) spécifique à la SDH à un signal STM-N (A1, N= 16, 64, 256,...).

7. Dispositif pour former des signaux Ethernet (A2) à partir d'un signal STM-N (E2) de la Hiérarchie Numérique Synchrone (SDH),
avec un démultiplexeur (D1) destiné à séparer l'information d'overhead (OH) du signal STM-N (E2),
un démappeur (DMAP1) destiné à récupérer le signal utile, un désassembleur de paquets (DP1) destiné à identifier et séparer l'information de drapeau et de remplissage, en sortie dudit désassembleur de paquets (DP1) étant appliquées des données utiles avec un débit binaire prédéfini pour les signaux STM-N,
un encodeur (Enc1) destiné à former un débit binaire prédéfini pour les signaux Ethernet.

8. Procédé permettant d'insérer des signaux Ethernet (E1) dans un signal STM-N de la Hiérarchie Numérique Synchrone (SDH), les signaux Ethernet (E1) étant convertis de manière sérielle/parallèle (S/P) et amenés mot par mot

EP 1 234 396 B1

à un décodeur (Dec1),
**caractérisé en ce que**
on effectue un décodage 1OB/8B du signal Ethernet et on marque des données de contrôle et données utiles.

9. Procédé selon la revendication 8,
**caractérisé en ce que**
on regroupe le train binaire décodé en sortie du décodeur (Dec1) en paquets et on assemble ces derniers en signaux VC-4.

10. Procédé selon la revendication 8,
**caractérisé en ce que**
on place au début d'un paquet un octet de drapeau et à la fin du paquet un octet de remplissage.

11. Procédé selon la revendication 8,
**caractérisé en ce que**
on place des données d'information entre l'octet de drapeau et l'octet de remplissage, le nombre de mots (mots de 9 bits) dans le champ d'information placé entre l'octet de drapeau et l'octet de remplissage étant divisible par 9 et long de m octets.

12. Procédé permettant de former des signaux Ethernet (A2) à partir d'un signal STM-N (E2) de la Hiérarchie Numérique Synchrone (SDH), l'information d'overhead (OH) étant séparée du signal STM-N, le signal utile récupéré et l'information de drapeau et de remplissage identifiée et séparée, le débit binaire des données utiles du signal STM-N (E2) étant adapté à un débit binaire correspondant au débit binaire de signaux Ethernet (A2) par un codage 9B/10B.

## FIG 1

1,25 Gbit/s Gigabit Ethernet

E1

S/P
S
P

TR1  T1  10/1

10

CGA  10  Dec1  10 Bit / 9 Bit  9  P1  optional SCR1  MAP1  VC-4  OH  M1  A1

125 MHz

1,125 Gbit/s

Taktzentrale

STM-N N=16, 64, ...

Sendeseite

EP 1 234 396 B1

1,25 Gbit/s Gigabit Ethernet

A2

P/S
S
P

TV1  10/1

1,25 GHz

10

Enc1  10 Bit / 9 Bit  9  DP1  DSCR1  LZA1  DMAP1  VC-4  D1  E2

1,125 Gbit/s

125 MHz

optional  für VC-4-8v Signale

STM-N N=16, 64, ...

OH

Empfangsseite

FIG 2

8 x 261 byte

8 x 260 byte = 2080 byte

C-4-8c

VC-4-8c

J1
B3
N1
Fixed stuff

9

1   7 byte

# FIG 3

| 1 byte | 36 byte | | | Im Mittel:<br>1,338 byte | | |
|---|---|---|---|---|---|---|
| Flag | Wort<br>1 | Information | Wort<br>32 | Padding | Flag | Information |

←———————————————— Paket ————————————————→

32 Worte à 9 bit

EP 1 234 396 B1

# FIG 4

EP 1 234 396 B1

# FIG 5

LAN CSMA/CD Layers

Höhere Schichten

| LLC Logical Link Control |
| MAC Control (optional) |
| MAC Media Access Control |
| PCS Physical Coding Sublayer |
| PMA Physical Medium Attachment |
| PMD Physical Medium Dependent |

Verwendete Schicht im Datenendgerät (z.B. Router)

Schicht des erfindungsgemäßen Verfahrens

| PCS Physical Coding Sublayer |
| PMA Physical Medium Attachment |
| PMD Physical Medium Dependent |

| 10B/9B Codierung |
| Packet |
| VC-4-8v,c Mapping |
| STM-N |

Gigabit Ethernet

STM-N

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0429888 B1